# EUROPEAN PATENT SPECIFICATION

(11) **EP 2 359 484 B1**
(45) Date of publication and mention of the grant of the patent: **05.07.2017**
(21) Application number: 09748906.6
(22) Date of filing: 28.10.2009
(51) Int. Cl.: H04B 1/40, H04B 1/48

(54) **INTERFACE FOR WIRELESS COMMUNICATION DEVICES**
SCHNITTSTELLE FÜR DRAHTLOSE KOMMUNIKATIONSEINRICHTUNGEN
INTERFACE POUR DISPOSITIFS DE RADIOCOMMUNICATION

(30) Priority: 29.10.2008 US 260346
(43) Date of publication of application: 24.08.2011
(73) Proprietor: Qualcomm Incorporated, San Diego, CA 92121 (US)
(72) Inventor: WEISSMAN, Haim M., San Diego California 92121 (US)
(74) Representative: Tomkins & Co
(86) International application number: PCT/US2009/062327
(87) International publication number: WO 2010/053776

(56) References cited:
- EP-A1- 1 213 844
- EP-A1- 1 261 142
- EP-A1- 1 473 845
- WO-A1-01/28114
- WO-A1-96/36105
- WO-A1-03/090370
- WO-A1-2007/025309
- WO-A2-2008/027531
- JP-A- 2002 246 936
- US-A1- 2002 101 907
- US-A1- 2003 048 132
- US-A1- 2003 193 923
- US-A1- 2005 226 353
- US-B1- 6 510 310

## Description

### BACKGROUND

### 1. Field

The subject matter disclosed herein relates to communications, and more particularly to wireless communication interfaces.

### 2. Information

Wireless communication systems are fast becoming one of the most prevalent technologies in the digital information arena. Satellite and cellular telephone services and other like wireless communication networks may already span the entire globe. Additionally, new wireless systems (e.g., networks) of various types and sizes are added each day to provide connectivity between a plethora of devices, both fixed and portable. Many of these wireless systems are coupled together through other communication systems and resources to promote even more communication and sharing of information. Indeed, it is not uncommon for some devices to be adapted to communicate with more than one wireless communication system and this trend appears to be growing. Accordingly, devices in such wireless environments may need to transmit and/or receive signals over a variety of different frequencies, frequency bands, frequency channels, or the like.

US patent Application Publication No. US2005/0226353 discloses a method and system for antenna interference cancellation.

### SUMMARY

In accordance with an aspect of the present description as set out in the appended claims, an apparatus may be provided which includes a receive antenna and a transmit antenna, wherein at least one of the receive antenna and the transmit antenna are adapted to provide at least 15 dB of isolation there between during transmission of a wireless signal via the transmit antenna, and a circuit operatively coupled to the receive antenna and the transmit antenna and including a power amplifier arrangement in a transmit path coupled to the transmit antenna.

In certain example implementations, the power amplifier arrangement may include at least two amplifiers that may be opertively arranged either in series with a filter coupled there between or separately between a switch and a frequency domain multiplexer. In certain example implementations, such amplifiers may opertively arranged between a switch and a frequency domain multiplexer, and wherein at least one of the at least two amplifiers is adapted to be selectively bypassed. In certain example implementations, at least one of such amplifiers may include a narrowband amplifier. In other example implementations, the power amplifier arrangement includes a single broadband amplifier.

In certain example implementations, the apparatus may include a small form factor device. In other example implementations, the apparatus may include a large form factor device and at least one of the receive antenna and the transmit antenna may be adapted to provide at least 20 dB of isolation there between during transmission of the wireless signal via the transmit antenna.

In certain example implementations, at least one of the transmit and receive antennas may be selectively adaptable for operation with at least two different wireless signal frequencies, frequency bands, and/or frequency channels.

In certain example implementations, the circuit may provide a receive path coupled to the receive antenna and neither the receive path nor the transmit path may include a duplexer. In certain example implementations, a frequency domain multiplexer includes a diplexer, and/or the switch may include a multiple-pole multiple throw switch.

In certain example implementations, the circuit may provide a receive path coupled to the receive antenna and such receive path may include a receive path switch coupled to the receive antenna. In certain example implementations, such a receive path switch may include a single-pole multiple-throw switch. In certain example implementations, the circuit may further include a transceiver that may be operatively coupled to the power amplifier arrangement. In certain example implementations, the circuit may further include a transceiver and a transmit path of the circuit may further include at least one transmit path filter that may be operatively coupled between the transceiver and the power amplifier arrangement. In certain example implementations, the circuit may further include a transceiver and a transmit path of the circuit may further include a transmit path filter that may be operatively coupled between the transceiver and the power amplifier arrangement.

In accordance with other aspects of the present description, a method is provided which may include providing a receive antenna and a transmit antenna, wherein at least one of the receive antenna and the transmit antenna may be adapted to provide at least 15 dB of isolation there between during transmission of a wireless signal via the transmit antenna, and providing a circuit operatively coupled to the receive antenna and the transmit antenna and comprising a power amplifier arrangement in a transmit path coupled to the transmit antenna, and wherein the circuit does not comprises a duplexer.

### BRIEF DESCRIPTION OF DRAWINGS

Non-limiting and non-exhaustive aspects are described with reference to the following figures, wherein like reference numerals refer to like parts throughout the various figures unless otherwise specified.
Fig. 1 is block diagram illustrating an exemplary environment that includes a device with at least one wireless communication interface for receiving and/or transmitting wireless signals in accordance with an implementation.
Fig. 2 is block diagram illustrating certain features of an exemplary device having a wireless communication interface that may, for example, be implemented in the environment of Fig. 1.
Fig. 3 is a schematic diagram illustrating certain components of a portion of a single-band wireless communication interface having a duplexer and a single antenna.
Fig. 4 is schematic diagram illustrating certain components of an exemplary RF Front-end adapted for use with a plurality of antennas without the need for a duplexer or other like circuit, and which may, for example, be implemented in the device in Figs. 1 and/or 2.
Fig. 5 is schematic diagram illustrating certain components of a multi-band RF front-end having a single antenna and a plurality of duplexers.
Fig. 6 is schematic diagram illustrating certain components of an exemplary multi-band RF front-end that may be adapted for use with a plurality of antennas without any duplexers and/or other like circuits, and which may, for example, be implemented in the device in Figs. 1 and/or 2.
Fig. 7 is a flow diagram illustrating an exemplary method that may be implemented in the device in Fig. 1, for example, to adaptively tune an receive antenna.
Fig. 8 is a flow diagram illustrating an exemplary method that may be implemented in the device in Fig. 1, for example, to adaptively tune a transmit antenna.

### DETAILED DESCRIPTION

Methods and apparatuses for providing wireless communication in a device are presented herein using a few example implementations. These methods and apparatuses may be adapted for use with a plurality of antennas including at least one receive antenna and at least one transmit antenna. Such antennas may be part of the device or operatively coupled to the device. Such antennas may, in certain implementations, include one or more selectively tuned antennas. Such antennas may, in certain implementations, include one or more resonate-tuned antennas. In certain exemplary implementations, circuitry may be provided to adaptively tune one or more antennas.

One potential benefit of having a plurality of antennas is that the circuitry in a receiver path(s) and/or transmitter path(s) may be designed without the need for a duplexer(s) and/or other like circuits. Duplexer circuits may, for example, in certain implementations increase the complexity, size, power requirements, cost, reduce the transmit power level, degrade receiver sensitivity, etc. associated with a circuit or device. Thus, it may be beneficial to avoid the use of duplexers or other like circuits.

In an exemplary implementation, for example, a transmit antenna and a receive antenna may be adapted to provide an adequate level of isolation (e.g., during operation) such that each of the antennas may be coupled to a transceiver (or separate receiver and transmitter) using receiver and/or transmit paths that do not require a duplexer.

As presented in greater detail below, certain exemplary apparatuses may include at least one power amplifier arrangement that may be adapted for use in a transmit path coupled to a transmit antenna. Such a power amplifier arrangement may, for example, be adapted for use with a single-band transmitter (or transceiver) and include at least two amplifiers that are arranged in series with a filter coupled there between. Such a power amplifier circuit may, for example, be adapted for use between a multiple-band transmitter (or transceiver) and include at least two amplifiers arranged separately between a switch and a frequency domain multiplexer. In both of these examples the use of a duplexer in the transmit path may be avoided.

As will be further illustrated and described below the receive paths of single-band and/or multiple-band receivers (or transceivers) may also be adapted to avoid the use of duplexer or other like circuits.

Reference throughout this specification to "one example", "an example" or "certain examples" means that a particular feature, structure, or characteristic described in connection with the feature and/or example is included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Methodologies described herein may be implemented by various means depending upon applications according to particular features and/or examples. For example, such methodologies may be implemented in hardware, firmware, software, and/or combinations thereof. In a hardware implementation, for example, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other devices units designed to perform the functions described herein, and/or combinations thereof.

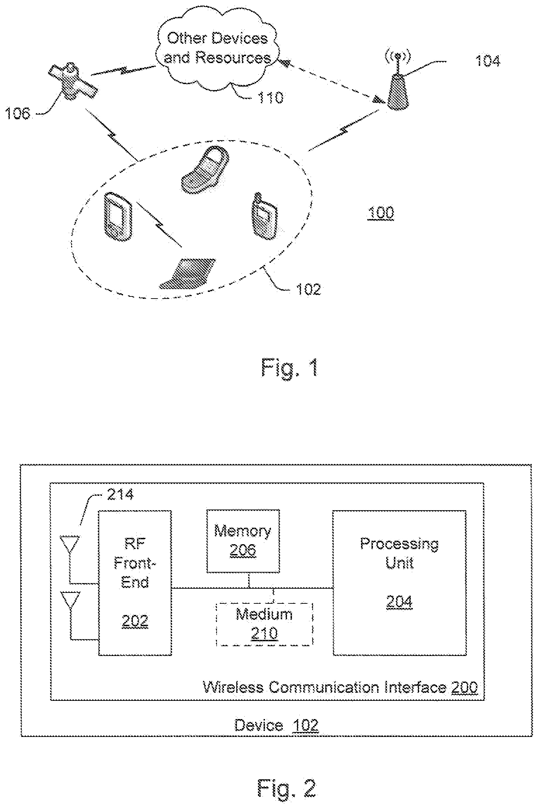

Fig. 1 is block diagram illustrating an environment 100 that includes at least one device 102 having at least one wireless communication interface for receiving wireless signals from and/or transmitting wireless signals to one or more other devices in accordance with an example implementation.

Device 102 may, for example, include a mobile device or a device that while movable is primarily intended to remain stationary. Thus, as used herein, the terms "device", "mobile device", "mobile station" (MS), may be used interchangeably as each term is intended to refer to any single device or any combinable group of devices that may transmit and/or receive wireless signals.

By way of example but not limitation, as illustrated using icons in Fig. 1, device 102 may include a mobile device such as a cellular phone, a smart phone, a personal digital assistant, a portable computing device, a navigation unit, and/or the like or any combination thereof. Again, in other exemplary implementations, device 102 may take the form of a machine that is mobile or stationary. In still other exemplary implementations, device 102 may take the form of one or more integrated circuits, circuit boards, and/or the like that may be operatively adapted for use in another device.

In certain implementations environment 100 may further include various computing and communication resources adapted to provide communication and/or other information processing services with respect to device 102. Thus, for example, environment 100 may be representative of any system(s) or a portion thereof that may include at least one device 102 adapted to transmit and/or receive wireless signals to/from at least one wireless communication system 104.

As illustrated in Fig. 1, wireless communication system 104 may be adapted to communicate with and/or otherwise operatively access other devices and/or resources as represented simply by cloud 110. For example, cloud 110 may include one or more communication devices, systems, networks, or services, and/or one or more computing devices, systems, networks, or services, and/or the like or any combination thereof.

Device 102 may receive transmissions from and/or transmit signals to a satellite 106 or other like resource. By way of example but not limitation, satellite 106 may include a communication satellite that may be part of a satellite telephone system, a navigation satellite that may be part or a satellite positioning system (SPS), and/or the like. Satellite 106 may therefore be representative of one or more transmitters, receivers, transceivers that may be adapted to communicate in some manner with device 102. Although illustrated using a satellite icon, it should be understood that "satellite" 106 may include transmitters, receivers, and/or transceivers that may be associated with one or more space vehicles (SVs) and/or one or more terrestrial based devices. As further illustrated, satellite 106 may be operatively coupled to other devices and resources represented via cloud 110.

As further illustrated in Fig. 1, wireless communication may occur between two or more devices 102. For example, two or more of devices 102 may be adapted per to receive and/or transmit wireless signals there between.

Environment 100 and/or one or more of the devices therein may be adapted, for example, to communicate with wireless signals using one or more wireless communication networks such as a wireless wide area network (WWAN), a wireless local area network (WLAN), a wireless personal area network (WPAN), and so on. The term "network" and "system" may be used interchangeably herein. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (W-CDMA), to name just a few radio technologies. Here, cdma2000 may include technologies implemented according to IS-95, IS-2000, and IS-856 standards. A TDMA network may implement Global System for Mobile Communications (GSM), Digital Advanced Mobile Phone System (DAMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may include an IEEE 802.11x network, and a WPAN may include a Bluetooth network, an IEEE 802.15x, for example. Such location determination techniques described herein may also be used for any combination of WWAN, WLAN and/or WPAN.

By way of further example, the techniques described herein may be used with any one of several SPS' and/or combinations of SPS'. Furthermore, such techniques may be used with positioning determination systems that utilize pseudolites or a combination of satellites and pseudolites. Pseudolites may include ground-based transmitters that, for example, broadcast a PN code or other ranging code (e.g., similar to a GPS or CDMA cellular signal) modulated on an L-band (or other frequency) carrier signal, which may be synchronized with time. Such a transmitter may be assigned a unique PN code so as to permit identification by a remote receiver. Pseudolites may be useful in situations where GPS signals from an orbiting satellite might be unavailable, such as in tunnels, mines, buildings, urban canyons or other enclosed areas. Another implementation of pseudolites is known as radio-beacons. The term "satellite", as used herein, is intended to include pseudolites, equivalents of pseudolites, and possibly others. The term "SPS signals", as used herein, is intended to include SPS-like signals from pseudolites or equivalents of pseudolites.

A "Global Navigation Satellite System" (GNSS) as referred to herein relates to an SPS having SVs transmitting synchronized navigation signals according to a common signaling scheme and/or format. Such a GNSS may, for example, include a constellation of SVs in synchronized orbits to transmit navigation signals to locations on a vast portion of the Earth's surface simultaneously from multiple SVs in the constellation. Such distinct GNSS' may include, for example, the NAVSTAR Global Positioning System (GPS) operated by the U.S. Department of Defense, the planned Galileo system being developed by the European Satellite Navigation System for operation by the European Union and European Space Agency, the Glonass system operated by the Russian government and the planned Compass system being developed by the Chinese government. It should be understood, however, that these are merely examples of GNSS' that may be used in particular implementations, and that other GNSS', including GNSS' implemented in the future, may be used without deviating from claimed subject matter.

An SV which is a member of a particular GNSS constellation typically transmits navigation signals in a format that is unique to the particular GNSS format. Accordingly, techniques for acquiring a navigation signal transmitted by an SV in a first GNSS may be altered for acquiring a navigation signal transmitted by an SV in a second GNSS. In a particular example, although claimed subject matter is not limited in this respect, it should be understood that GPS, Galileo and Glonass each represent a GNSS which is distinct from the other two named SPS'. However, these are merely examples of SPS' associated with distinct GNSS' and claimed subject matter is not limited in this respect.

Some exemplary methods and apparatuses will now be described, which may be implemented in one or more devices, such as device 102, to allow for wireless communication interfaces which may be beneficial in certain devices due to performance, size, power requirements, adaptability, cost, and/or other like design/operation factors and considerations.

As illustrated in the exemplary block diagram of Fig. 2, in certain example implementations, device 102 may include a wireless communication interface 200 having at least one RF front-end 202 that may be adapted to receive transmission of at least one wireless signal and generate a corresponding signal based thereon. Interface 200 may also include, for example, at least one processing unit 204 or like processor that may be adapted to accept or otherwise access the signal generated by RF front-end 202. In certain implementations, for example, such a device may also include memory 206 that may be coupled to processing unit 204 and adapted to store data associated with the signal generated by RF front-end 202. In certain implementations memory 206 may also be adapted to store other data and/or instructions that may be associated with wireless communication interface 200 and/or device 102.

Two or more antennas 214 may be included as part of wireless communication interface 200 and/or may otherwise be opertively coupled to wireless communication interface 200. In certain example implementations, antennas 214 may be provided as part of device 102 and/or may be opertively coupled to device 102.

In certain implementations antennas 214 may, for example, include at least one antenna and/or portion thereof that may be opertively adapted for use with wireless signals that are transmitted over one frequency (e.g., a carrier frequency), a frequency band, a frequency channel (e.g., within a frequency band), and/or the like. In certain implementations antennas 214 may, for example, include at least one antenna and/or portion thereof that may be opertively adapted for use with wireless signals that are transmitted over more than one frequency, more than one frequency band, more than one frequency channel, and/or the like.

By way of example but not limitation, in certain implementations antennas 214 may include at least one tunable antenna. For example, antennas 214 may include a tunable antenna system (or portion thereof) such as described in United States Patent Application Serial Number 11/213,464, as filed on August 26, 2005. Certain tunable antennas may, for example, include voltage-variable MEMS, voltage-variable Ferro-electric capacitors, switched MEMS capacitors, and/or the like to adapt an operating frequency of a transmit antenna and/or receive antenna.

Separate antennas, whether adaptable or not, may be provided for transmitting and receiving wireless signals in accordance with certain aspects of this description. By using separate and adequately isolated transmit and receive antennas it may be possible to significantly alter the circuitry of RF front-end 202 to support improved performance, reduce size, reduce cost, simplify operation, simplify production, and/or provide other useful benefits.

For example, by adapting an antenna system such as disclosed in United States Patent Application Serial Number 11/213,464, isolation between the transmit and receive antennas may be adequate enough to allow wireless communication interface 200 to be adapted for use in both "large" form factor devices such as lap top computers or the like, and "small" form factor devices such as mobile stations or the like. By adapting an antenna system such as disclosed in United States Patent Application Serial Number 11/213,464, isolation between the transmit and receive antennas may, for example, be greater than approximately 15 dB in small form factor devices and greater than approximately 20dB in large form factor devices.

Consequently, as described in subsequent sections and examples below, the circuitry of RF front-end 202 and/or other portions of wireless communication interface 200 may be designed to take advantage of the isolation provided by antennas 214 and as such to provide additional benefits. Those skilled in the art will recognize that other antennas and/or circuitry may also be adapted for use with wireless communication interface 200.

As illustrated in Fig. 2 a computer readable medium 210 may be provided and accessed by processing unit 204, for example. As such, in certain example implementations, the methods and/or apparatuses may take the form in whole or part of a computer readable medium 210 that may include computer implementable instructions stored thereon, which if executed by at least one processing unit or other like circuitry are adapted to enable the processing unit 204 or the other like circuitry to adapt and/or otherwise support the operation of wireless communication interface 200 and/or other subsystems (not shown) that may be provided by device 102. For example, data and/or instructions may be provided via computer readable medium 210 and/or memory 206 that if implemented by processing unit 204 allow for antennas 214 to be selectively tuned to receive and/or transmit signals over a particular frequency, frequency band, frequency channel, and/or the like. For example, data and/or instructions may be provided via computer readable medium 210 and/or memory 206 that if implemented by processing unit 204 allow for the processing and acquisition of one or more specific types of signals as may be received via antennas 214.

With regard to signal reception, processing unit 204 may, for example, include one or more processing units or like circuitry that may be adapted to process received signal(s) as generated by RF front-end 202 based on the wireless signals received via at least one of antennas 214. For example, processing unit 204 may be adapted per a specific wireless communication standard, protocol, and/or the like, to reproduce or otherwise identify the information originally encoded within and communicated via the wireless signal(s). Such processing units and/or the like are well known.

With regard to signal transmission, processing unit 204 may, for example, include one or more processing units or like circuitry that may be adapted to generate outgoing signal(s) based, at least in part, on one or more other signals and/or information that may be generated, for example, by other subsystems (not shown) in device 102. For example, processing unit 204 may access data in memory 206 pertaining to a short messaging service (SMS) message, an electronic-mail, an image, a tone or sound, a voice conversation, etc. Processing unit 204 may then generate applicable outgoing signal(s) that may be provided to or accessed by RF front-end 202 and used to generate a corresponding transmit signal(s) that may be transmitted via at least one of antennas 214. For example, processing unit 204 may be adapted to generate such an outgoing signal(s) per a specific wireless communication standard, protocol, and/or the like, to encode or otherwise include therein the information that is intended to be communicated via a transmitted wireless signal(s) from device 102. Such processing units and/or the like are well known.

Processing unit 204 or other like logic may, for example, be adapted in certain implementations to selectively adapt or otherwise initiate selection of circuitry and/or components within RF front-end 202 that may be adaptable, selectable or selectively controlled as applicable to support wireless communication. Thus, for example, processing unit 204 may be adapted to select a frequency, frequency band, frequency channel, and/or the like, and adapt antennas, circuits, components, transmit paths, receive paths, switches, power amplifier arrangements, and/or the like as may be needed to transmit and/or receive wireless signals accordingly.

Although not illustrated in Fig. 2, it should be understood that device 102 may include a variety of other subsystems, mechanisms, logic, and/or circuitry as may be appropriate for the operation of device 102 and which may be operatively coupled to wireless communication interface 200 such that information may be transmitted and/or received thereby. For example, if device 102 includes a lap tap computer, such a computer may include one or more central processing units, additional memory and/or data storage mechanisms, a power supply, and one or more user interfaces such as a display, a keyboard, a speaker, a microphone, a camera, etc. Thus, in such an example, wireless communication interface 200 may be operatively coupled to one or more of the subsystems or components of the computer. As such, such a computer may be adapted to accept or otherwise access information (e.g., digital data) that may be transmitted over a wireless link to one or more other devices, etc. Similarly, wireless communication interface 200 may be operatively coupled and adapted as such to provide information (e.g., digital data) that was received over a wireless link from one or more other devices, etc. to one or more of the subsystems or components of the computer. It should be recognized that similar adaptations of wireless communication interface 200 may be provided for use with various other types of devices 102 without deviating from the claimed subject matter.

In certain implementations, all or part of wireless communication interface 200 may take the form of one or more separately added circuits, components and/or subsystem(s) within device 102. In certain implementations, all or part of wireless communication interface 200 may be integral to a circuit and/or a subsystem within device 102 that is adapted to perform other operations.

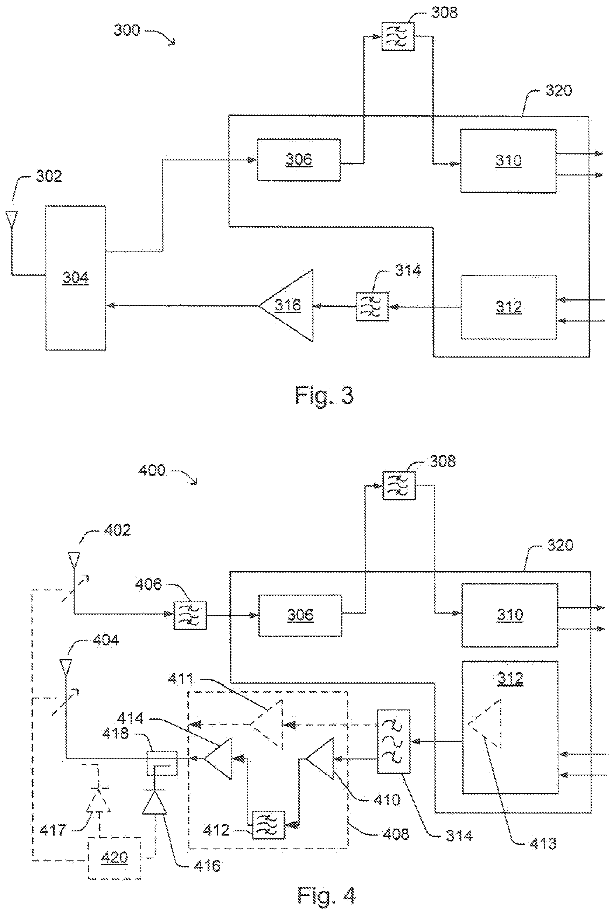

Attention is now drawn to Fig. 3, which is a schematic diagram illustrating certain components of a RF front-end 300 of a single-band wireless communication interface having a duplexer 304 and a single antenna 302. RF front-end 300 is provided to illustrate, by way of example, that certain wireless communication interface designs may be adapted to use a single antenna for transmitting and receiving signals by incorporating a duplexer or other like component(s).

In this example, with regard to wireless signal reception, RF front-end 300 may include an antenna 302 that may be adapted for receiving and transmitting wireless signals over a single frequency, frequency band, and/or frequency channel. A duplexer 304 may be connected to antenna 302 and adapted to support wireless signal reception by providing a received signal to an input terminal of a signal amplifier, such as, a low noise amplifier (LNA) 306, for amplification. The output terminal of LNA 306 may be connected to the input terminal of a filter, such as, an RF surface acoustic wave (SAW) filter 308. The output terminal of SAW filter 308 may be provided to the input terminal of a demodulator 310 which may output corresponding demodulated signals based the received wireless signal to one or more other circuits.

In this example, with regard to wireless signal transmission, RF front-end 300 may include a modulator 312 (e.g., a quad modulator, or the like) that receives as input signals to be up converted (or otherwise modified) and transmitted over a wireless link. The output terminal of modulator 312 may be connected to the input terminal of a filter, such as, an RF SAW filter 314. The output terminal of SAW filter 314 may be provided to the input terminal of a power amplifier (PA) 316 which may amplify the filtered and modulated signal and provide such to duplexer 304. Duplexer 304 may be adapted to provide a transmit signal to antenna 302. In certain implementations, power amplifier 316 may include multiple amplifying stages. For example, such a power amplifier may include a first stage power amplifier with gain of ∼20dB coupled in series with a second stage power amplifier with gain of ∼10dB for a total gain of ∼30dB. The broad-band noise of such a power amplifier may, however, leak into and/or otherwise affect other circuits within the receiver depending on the total power amplifier gain and/or the antenna isolation.

As shown in Fig. 3, LNA 306, demodulator 310 and modulator 312 may be included in the form of an integrated transceiver, such as, a zero insertion force (ZIF) transceiver 320 or the like.

Unfortunately, in certain implementations, a RF front-end such as RF front-end 300 with duplexer 304 may prove to be too costly, too large, too complex, and/or lack the performance as might be desired for certain wireless communication interfaces and/or devices.

Reference is now made to Fig. 4, which is schematic diagram illustrating certain components of an exemplary single-band RF front-end 400 adapted for use with a plurality of antennas without the need for a duplexer or other like circuit, and which may, for example, be implemented in RF front-end 202 in wireless communication interface 200, and/or otherwise within device 102.

RF front-end 400 may be similar to RF front-end 300 in that it may include, for example, a transceiver 320 or the like to provide LNA 306, demodulator 310 and modulator 312. Where RF front-end 400 differs from RF front-end 300 is that there is no need for a duplexer given separate receive antenna 402 and transmit antenna 404. Thus, in accordance with an aspect of this description certain benefits may occur by providing separate antennas 402 and 404 with adequate isolation (e.g., greater than about 15 dB for small form factor devices) there between and providing additional filtering as illustrated, for example, in RF front-end 400. Such benefits may, for example, include a reduction in circuit complexity and/or receiver noise figure, size, cost, power requirements, etc., as a result of eliminating the need for a duplexer or other like circuit to allow the use of one antenna for both transmitting and receiving wireless signals.
In RF front-end 400, for example, a receive path filter 406 (e.g., a SAW filer or the like) may be provided in the receive path between receive antenna 402 and LNA 306. Receiver path filter 406 may be adapted to filter out at least a portion of the unwanted signals that may be received by receive antenna 402. In accordance with certain aspects of the present description, receive antenna 402 and/or transmit antenna 404 may be adapted to be resonate-tuned to a specific frequency, frequency band, frequency channel, and/or the like. Moreover, by applying techniques as disclosed in United States Patent Application Serial Number 11/213,464, the isolation between the transmit and receive antennas may, for example, be greater than approximately 15 dB in smaller form factor devices and greater than approximately 20dB in larger form factor devices.

With regard to the transmission path, RF front-end 400 may include, for example, a power amplifier arrangement 408 between a transmit path filter 314 and transmit antenna 404. Power amplifier arrangement 408 may include a first stage amplifier 410 (e.g., a high gain amplifier) having an input terminal connected to the output terminal of transmit path filter 314 and an output terminal connected to the input terminal of a power amplifier arrangement filter 412 (e.g., a SAW filter or the like), which may be internal (as illustrated) or external to power amplifier arrangement 408.

Power amplifier arrangement filter 412 may be adapted to filter out noise that may be introduced via first stage amplifier 410, for example. The output terminal of power amplifier arrangement filter 412 may be connected to an input terminal of a second stage amplifier 414 (e.g., a low gain amplifier). The output terminal of second stage amplifier 414 may be provided to transmit antenna 404. Here, for example, the resulting signal from second stage amplifier 414 may be considered to be at least partially noise filtered as a result of the resonant-tuning and/or existing isolation between transmit antenna 404 and receive antenna 402.

Power amplifier arrangement filter 412 may be employed to reject, at least in part, broad-band noise that may be associated with first stage amplifier 410 having a higher gain than the second stage amplifier 414 (e.g., ∼20dB compared to ∼10dB in certain example implementations). Thus, noise that may leak into and/or otherwise affect other circuits within the receiver may be associated more with lower gain second stage amplifier 414. Accordingly, unlike the example in Fig. 3, there may be no need for a duplexer with high rejection of the transmitter broadband noise at the receiver band. In certain implementations, for example, eliminating the need for such duplexer may allow for a higher output power (e.g., ∼3dB or possibly more) given a typically high insertion loss of such a duplexer. Furthermore, broad-band noise associated with the lower gain of second stage amplifier 414 may, for example, be significantly rejected by the isolation between antennas 402 and 404.

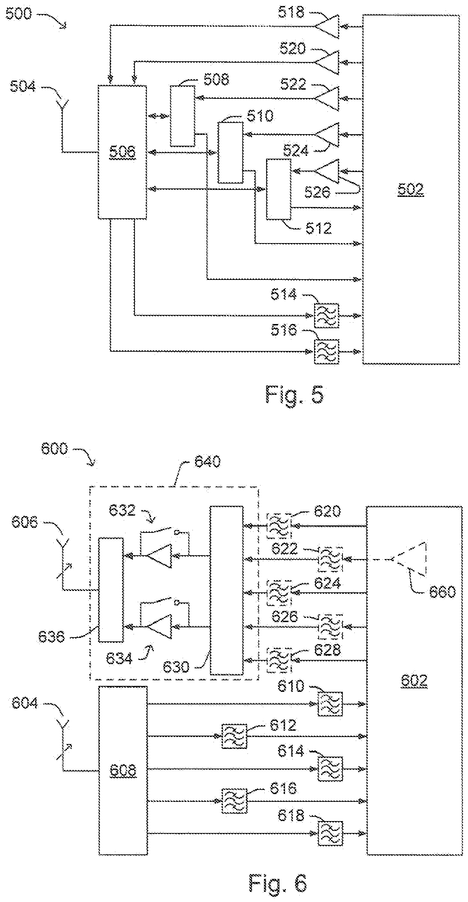

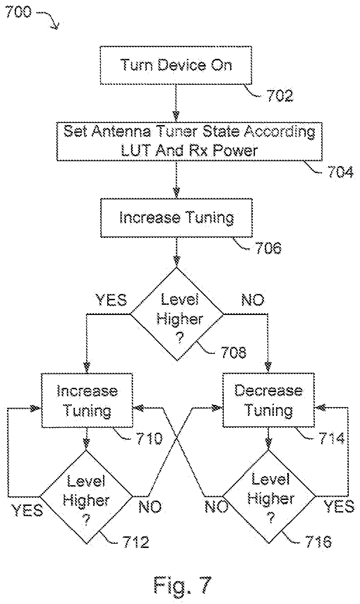

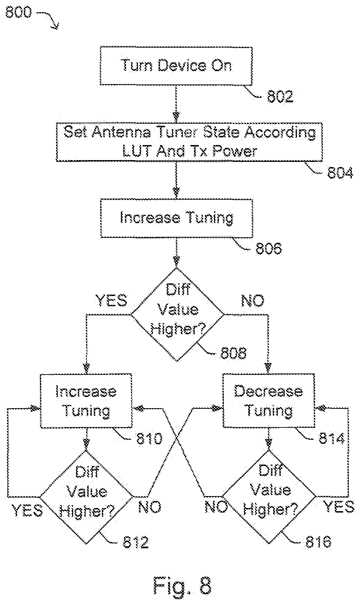

In certain implementations, one or more sensors 416 and/or 417 may also be provided to detect and/or measure the output of PA 408 via a coupler 418 or the like. Such detection via sensor 416 may, for example, detect the power level of the transmit signal so as to determine how to adapt or otherwise tune one or more antennas through applicable circuitry 420 and/or other like mechanisms. Such detection via sensor 417 may, for example, detect the power level reflected back from antenna 404. In certain implementations, a "diff value" may be established using such sensors and/or the like : quoted above is referred to this case Details for certain exemplary adaptive antenna arrangements are provided in subsequent sections with regard to Figs 7 and 8, which illustrate exemplary methods that may be implemented via circuitry 420. It is also recognized that such adaptive antenna arrangement and/or portions thereof may be adapted for use in multiple-band implementations, for example, as illustrated in Fig. 6 below.

The example implementation illustrated in Fig. 4 may used for single frequency, band, and/or channel wireless communication interface. The techniques are not limited, however, to such "single-band" implementations as further illustrated by the exemplary "multi-band" RF front-end example presented below in Fig. 6.

Before describing Fig. 6, reference is made to Fig. 5, which is schematic diagram illustrating certain features of a multi-band RF front-end 500 having a single antenna 504 adapted for use in receiving and transmitting wireless signals and a plurality of duplexers (508, 510 and 512), for example.

RF front-end 500 may include a transceiver 502 (e.g., a radio frequency integrated circuit (RFIC), or the like) that may be adapted to produce transmit signals and process received signals. Here, RF front-end 500 may be adapted to selectively transmit and/or receive signals over various frequencies, frequency bands, frequency channels, and/or the like using a single antenna 504.

With regard to receiving signals, RF front-end 500 includes a switch 506 or other like circuitry that may be adapted to selectively route received signals from antenna 504 to other selected components as illustrated. By way of example, switch 506 may include a single-pole, multiple-throw switch (e.g., a SP7T switch).

Here, several examples are provided for different frequency band signals. For example, switch 506 may be adapted to selectively provide a received 850 MHz signal to a duplexer 508 which may be connected to process the received 850 MHz signal and provide such to transceiver 502. Similarly, for example, switch 506 may be adapted to selectively provide a received 1900 MHz signal to a duplexer 510 which may be connected to process the received 1900 MHz signal and provide such to transceiver 502. Also similarly, for example, switch 506 may be adapted to selectively provide a received 2100 MHz signal to a duplexer 512 which may be connected to process the received 2100 MHz signal and provide such to transceiver 502.

As further illustrated in Fig. 5, switch 506 may be adapted to provide certain signals to filters (e.g., SAW filters) without the use of one or more duplexers. For example, a received 900 MHz signal may be selectively provided by switch 506 to the input terminal of SAW filter 514, which may be connected at its output terminal to an input terminal of transceiver 502. Similarly, for example, a received 1800 MHz signal may be selectively provided by switch 506 to the input terminal of SAW filter 516, which may be connected at its output terminal to an input terminal of transceiver 502.

With regard to the transmit path of RF front-end 500, transceiver 502 may be adapted to provide a selected transmit signal to the input terminal of a corresponding power amplifier (PA). For example, a 900 MHz transmit signal may be provided by transceiver 502 to an input terminal of PA 518 and/or a 1800 MHz transmit signal may be provided by transceiver 502 to an input terminal of PA 520. PA 518 and PA 520 may have output terminals connected to switch 506 and switch 506 may be adapted to selectively provide a selected amplified transmit signal to antenna 504. Duplexers 508, 510 and 512 may be adapted for use with transmit signals of 850 MHz, 1900 MHz and 2100 MHz, respectively, following amplification by PA 522, 524 and 526, again respectively. As such, duplexers 508, 510 and 512 may have output terminals connected to respective input terminals of switch 506, and switch 506 may be adapted to selectively provide a selected amplified transmit signal to antenna 504.

In certain implementations, one or more of PA 518, 520, 524, and/or 526 may include multiple amplifying stages. For example, such a PA may include a first stage power amplifier with gain of ∼20dB coupled in series with a second stage power amplifier with gain of ∼10dB.

As shown in the example above, some RF front-ends may include a plurality of duplexers and power amplifiers. Unfortunately, in certain implementations, having multiple duplexers and/or power amplifiers may prove to be too costly, too large, too complex, and/or lack the performance as might be desired for certain wireless communication interfaces and/or devices.

Reference is now made to Fig. 6, which is a schematic diagram illustrating certain components/features of an exemplary multi-band RF front-end 600 adapted for use with a plurality of antennas without the need for any duplexers or other like circuits. RF front-end 600 may also be implemented with fewer power amplifiers in certain implementations, and/or possible even with a single broadband power amplifier in specific implementations. RF front-end 600 may, for example, be implemented in RF front-end 202 in wireless communication interface 200, and/or otherwise within device 102.

RF front-end 600 may include a transceiver 602 (e.g., an RFIC, or the like) that may be adapted to produce transmit signals and process received signals. Here, RF front-end 600 may be adapted to receive and transmit signals over various selected frequencies, frequency bands, frequency channels, and/or the like, using at least one receive antenna 604 and transmit antenna 606, respectively. In certain example implementations, receive antenna 604 and/or transmit antenna 606 may be adaptive and/or otherwise tunable. For example, one or more of the antennas may be selectively resonant-tuned.

In certain example implementations, receive antenna 604 and/or transmit antenna 606 may each include a plurality of antennas. For example, two or more receive antennas 604 may be provided, and/or two or more transmit antennas may be provided to allow for wireless communication over two or more frequencies, frequency bands, frequency channels, and/or the like.

With regard to the receive path, receive antenna 604 may be connected to a receive path switch 608 or other like circuitry that may selectively provide a received signal to a selected receive path filter (e.g., a SAW filter or the like). By way of example, receive path switch 608 may include a multiple-pole multiple-throw switch (e.g., a DP5T switch). Thus, for example, if a 850 MHz signal is received via antenna 604 receive path switch 608 may be adapted to provide the received 850 MHz signal to receive path filter 610, which may have an output terminal connected to an applicable input terminal of transceiver 602. For example, if a 1900 MHz signal is received via antenna 604 receive path switch 608 may be adapted to provide the received 1900 MHz signal to receive path filter 612, which may have an output terminal connected to an applicable input terminal of transceiver 602. Similarly, for example, if a 2100 MHz signal is received via antenna 604 receive path switch 608 may be adapted to provide the received 2100 MHz signal to receive path filter 614, which may have an output terminal connected to an applicable input terminal of transceiver 602. If a 900 MHz signal is received via antenna 604, for example, receive path switch 608 may be adapted to provide the received 900 MHz signal to receive path filter 616, which also has its output terminal connected to an applicable input terminal of transceiver 602. Finally, if an 1800 MHz signal is received via antenna 604 receive path switch 608 may be adapted to provide the received 1800 MHz signal to receive path filter 618, which may have an output terminal connected to an applicable input terminal of transceiver 602.

Here, in this exemplary receive path, unlike that in Fig. 5, no duplexers are used. Eliminating and/or reducing such duplexers may be beneficial to certain designs and implementations.

With regard to the transmit path, transceiver 602 may be adapted to selectively generate a plurality of different transmit signals. For example, continuing with the examples provided in the receive path described above, transceiver 602 may be adapted to selectively generate a transmit signal over a frequency band of 850 MHz, 1900 MHz, 2100 MHz, 900 MHz, or 1800 MHz. Thus, transceiver 602 may have a plurality of output terminals, with each output terminal being adapted to provide a specific frequency band transmit signal. As illustrated in Fig. 6, one or more of such transmit signals may, for example, be provided to an input terminal of an (optional) applicable transmit path filter having an output terminal connected to corresponding input terminal of a transmit path switch 630. For example, one or more of transmit path filters (e.g., SAW filters or the like) 620, 622, 624, 626, and/or 628 may be provided. In other implementations, one or more of such transmit signals may be provided directly from transceiver 602 to a corresponding input terminal of transmit path switch 630.

In this example implementation, transmit path filter 620 may be adapted to filter a 850 MHz transmit signal, transmit path filter 622 may be adapted to filter a 1900 MHz transmit signal, transmit path filter 624 may be adapted to filter a 2100 MHz transmit signal, transmit path filter 626 may be adapted to filter a 900 MHz transmit signal, and transmit path filter 628 may be adapted to filter a 1800 MHz transmit signal.

As illustrated in this example, transmit path switch 630 may have a plurality of selectable output terminals. Here, for example, transmit path switch 630 has two output terminals wherein a first one of the output terminals may be connected to a first selective amplifier circuit 632 and the second one of the output terminals may be connected to a second selective amplifier circuit 634. As illustrated, selective amplifier circuits 632 and 634 may include amplifiers that may be selectively bypassed depending on whether a selected transmit signal needs to be further amplified. Output terminals of selective amplifier circuits 632 and 634 may be connected to input terminals of a frequency domain multiplexer 636 (e.g., a diplexer in this example) having an output terminal that may be connected to transmit antenna 606. In certain implementations, if a single amplifier replaces amplifiers 632 and 634, then switch 630 may, for example, have five inputs and a single output to a broadband amplifier. In the example implementation above, selective amplifier circuit 632 may, for example, include a low gain PA (G= ∼10dB) with an operating frequency band of 1710-1980 MHz, selective amplifier circuit 634 may include a low gain PA (G= ∼10dB) with an operating frequency band of 824-915 MHz, and diplexer 636 may be adapted to therefore select frequency bands of 1710-1980MHz or 824-915Mhz.

In the above example, transmit path switch 630, selective amplifier circuits 632 and 634, and frequency domain multiplexer 636 may be part of a power amplifier arrangement 640 for use between transceiver 602 and transmit antenna 606. In other example implementations, amplifier arrangement 640 may be replaced by a single broadband amplifier, which may eliminate the need for a diplexer and/or a switch such as 636. As illustrated, in certain implementations, one or more transmit path filters may be coupled in the transmit path between power amplifier arrangement 640 and transceiver 602.

In certain example implementations, the output power out of transceiver 602 transmit section may be adjusted and/or otherwise established via the gain provided by amplifier circuits 632 and 634. Here, for example, in the case of a low gain power amplifier a transceiver output power may be able to reach higher output power than in the case of power amplifier having higher gain in order to achieve the required transmit power level at the power amplifier output (e.g.,, antenna port) while minimizing or otherwise reducing the potential for broadband noise in the transmit path that may fall over the receive frequencies.

In certain exemplary implementations, transceiver 602 may be adapted to provide such transmit signals with an output power of about +15dBm while providing for low phase noise, and selective amplifier circuits 632 and 634 may include "lower" gain amplifiers (e.g., about 10 dB). Additionally, for example, antennas 604 and 606 may be adapted to provide isolation of at least about 20 dB to about 25 dB or more.

In certain implementations, one or more adaptive antenna arrangements (not shown in Fig. 6, but illustrated in Fig. 4) may be provided in or otherwise adapted for use with RF front-end 600. For example, such an adaptive antenna arrangement may include (as shown in Fig. 4) a sensor adapted to detect and/or measure the output from frequency domain multiplexer 636 via a coupler or the like. Such detection may, for example, detect the power level of the transmit signal so as to determine how to adapt or otherwise tune one or more antennas through applicable circuitry (e.g., circuitry 420) and/or other like mechanisms.

In RF front-end 600, for example, one or more first stage amplifiers may be provided, as represented by on-chip amplifier 660, which may have outputs coupled to respective transmit path filters (e.g., such as transmit path filter 624 in this example). Such first stage amplifiers, by being provided within transceiver 602, may allow for broad-band noise at each transceiver output (here, each output may be associated with a different system/frequency band) may be significantly rejected by respective off-chip transmit path filters and hence no duplexers may be needed. Instead, one or more selective amplifier circuits 632 and 634 may be employed.

In certain example implementations, therefore, when compared to RF front-end 500 of Fig.5, the one or two selective amplifier circuits may have lower gain than the five PA's, but since there may be ∼3dB or more to spare in output power by avoiding the use of duplexers, one may utilize less efficient power amplifiers to provide for an output power that may be greater. Thus, by avoiding the use of duplexers one may reduce the number of power amplifiers from five to one or two that provide for a broadband frequency response to cover all five narrow band power amplifiers frequency bands.

In accordance with certain aspects of this description, by eliminating the use of duplexers an insertion loss between the amplifier and the antenna 606 may be significantly reduced. As such, one may benefit from higher transmit power or alternatively use the amplifier at a lower transmit power while still maintaining the same EIRP at the antenna and reducing power consumption. Such power amplifier to antenna insertion loss reduction may also allow for the implementation of a single broadband amplifier (e.g. 411) or two narrowband amplifiers (e.g., 410 and 414) instead of multiple amplifiers providing the same EIRP. For a single broadband amplifier implementation, transceiver 320 and/or modulator 312 may, for example, be adapted to provide an equivalent higher gain first stage amplification as represented by on-chip amplifier 413 which may have an output coupled to transmit path filter 314.

In accordance with certain aspects of this description, with a receive path filter (e.g., a SAW filter, such as, 610, 612, 614, 616, 618 of Fig. 6) insertion loss may be reduced as compared to duplexers 508, 510, 524 (e.g., Fig. 5). For example, in certain implementations, a receiver noise figure associated with RF front-end 600 may be reduced in the order of 1 dB compared with that of RF front-end 500.

Certain exemplary methods that may be implemented in one or more adaptive antenna arrangements are described below with regard to Figs 7 and 8. These exemplary methods may, for example, be implemented in circuitry 420 (RF front-end 400) and/or similar circuitry that may be included in RF front-end 600. Such circuitry may include, for example, logic implemented using hardware (digital and/or analog), firmware, and/or software.

Fig. 7 is a flow diagram illustrating an exemplary method 700 that may be implemented, for example, in device 102 (Fig. 1), for example, to adaptively tune a receive antenna.

At block 702, the device may be turned on or otherwise started. At block 704, an initial receive antenna tuner state may be established, for example, according to an LUT, receive power setting, and/or the like. At block 706, the frequency tuning of the receive antenna may be increased.

At block 708, it may be determined if the detected or otherwise measured received signal level has increased in amplitude. If the received signal level has increased in amplitude, then at block 710, the frequency tuning of the receive antenna may be further increased. At block 712, it may be determined if the detected or otherwise measured received signal level has further increased in amplitude. If the received signal level has further increased in amplitude, then at block 710 the frequency tuning of the receive antenna may again be further increased. If the received signal level has not further increased in amplitude as determined at block 712, then at block 714 the frequency tuning of the receive antenna may instead be decreased. Such a process may be more efficient in a stationary environment, and as such may or may not be implemented in a fading environment scenario.

At block 716, it may be determined if the received signal level has increased in amplitude. If the received signal level has increased in amplitude, then at block 714 the frequency tuning of the receive antenna may again be further decreased. If the received signal level has not increased in amplitude as determined at block 716, then at block 710 the frequency tuning of the receive antenna may instead be increased.

Thus, as can be seen in this example, method 700 may be adapted in accordance with blocks 710, 712, 714, and 716 to adaptively tune the receive antenna on a continuing basis (e.g., dynamically). In other implementations, the receive antenna may be adaptively tuned at selected times and/or in response to certain events, etc.

Method 700 may, for example, provide for adaptive resonant-tuning of a receive antenna. In certain exemplary implementations, an initial receive antenna tuner state may be established based, at least in part, on a look-up table (e.g., stored in memory), or the like. Method 700 may, for example, be adapted thereafter to detect the receiver demodulated output receive signal strength and tune for maximum signal strength. In certain implementations, the criteria used for tuning the receive antenna may include measured signal power or the like, and/or a performance criteria such as BER, PER, FER, and/or the like. In certain implementations, detected received signal power may be considered without demodulation, for example, as detected using detector/power-meter, and/or the like. In certain implementations, such detection may be associated with a pilot receive signal, such as, e.g., a CDMA pilot, OFDM pilots, and/or the like.

In certain implementations, method 700 may be adapted for use when receiver is not active. Method 700 may be adapted, for example, to operate for a relatively long period of time and adjust the receive antenna as needed to provide for an optimal receive signal level, optimal performance (e.g., based on BER), or the like. In certain implementations, fast variations of tuning the receive antenna according to method 700 may be provided for compensating Doppler and/or other frequency inaccuracies. It should be recognized that, with method 700, the tuning rate and delay may be configured based on specific system or network needs

Fig. 8 is a flow diagram illustrating an exemplary method 800 that may be implemented, for example, in device 102 (Fig. 1), for example, to adaptively tune a transmit antenna.

At block 802, the device may be turned on or otherwise started. At block 804, an initial transmit antenna tuner state may be established, for example, according to an LUT, transmit power setting, and/or the like. At block 806, the frequency tuning of the transmit antenna may be increased.

At block 808, it may be determined if a difference (e.g., "diff value") between a detected or otherwise measured transmit signal level (e.g., power level) and an expected transmit signal level ((e.g., power level) has increased. If the diff value has increased, then at block 810, the frequency tuning of the transmit antenna may be further increased. At block 812, it may be determined if the diff value has further increased. If the diff value has further increased, then at block 810 the frequency tuning of the transmit antenna may again be further increased. If the diff value has not further increased as determined at block 812, then at block 814 the frequency tuning of the transmit antenna may instead be decreased.

At block 816, it may be determined if the diff value has increased. If the diff value has increased, then at block 814 the frequency tuning of the transmit antenna may again be further decreased. If the diff value has not increased as determined at block 816, then at block 810 the frequency tuning of the transmit antenna may instead be increased.

Thus, as can be seen in this example, method 800 may be adapted in accordance with blocks 810, 812, 814, and 816 to adaptively tune the transmit antenna on a continuing basis (e.g., dynamically). In other implementations, the transmit antenna may be adaptively tuned at selected times and/or as a result of certain events, etc.

Method 800 may, for example, provide for adaptive resonant-tuning of a transmit antenna. In certain exemplary implementations, as illustrated in Fig. 4, a detector or other like circuitry may be adapted to measure the actual transmit power provided to the transmit antenna. In certain exemplary implementations, an initial transmit antenna tuner state may be established based, at least in part, on a look-up table (e.g., stored in memory), or the like. With method 800, for example, a transmit antenna may be tuned for maximum signal level on an on-going basis based, at least in part of the diff value. Here, for example, in certain implementations the tuning of a transmit antenna may be adjusted based, at least in part, on a determination that the diff value exceeds a threshold value.

In certain implementations, at least two detectors may be used. For example, two detectors may be provided in a transmit path wherein each is opertively coupled to a different "transmit direction". Thus, for example, a first detector may be opertively coupled along a transmit direction to measure a transmit signal provided to the transmit antenna, and a second detector may be opertively coupled opposite the transmit direction to measure a signal return from the transmit antenna. In such an implementation, a "diff value" may be established using the measurements from the first and second detectors. Hence, method 800 may be adapted to adapt a transmit an antenna until maximum or otherwise acceptable diff value (e.g., a ratio) between power going to antenna and power returning from the antenna is achieved.

In accordance with certain exemplary implementations, techniques have been described in detail herein that may be implemented in various devices and/or systems. By way of further example, but not limitation, such techniques may be implemented in the form of a phone/communication device transceiver for full duplex operation. Such implementations may avoid using a high gain power amplifier stage (e.g., in the order of 30dB) and a duplexer (e.g., as in Fig. 3) and/or using several high gain off-chip power amplifiers and duplexers (e.g., as in Fig. 5). Instead, an RFIC transceiver (e.g., as in Fig. 6) may be used, in which the output power may, for example, be on the order of +15dBm so that a relatively simple low power SAW filter or the like may reject its broadband noise at the receive band and a low gain off-chip single broadband power amplifier or two low gain narrower-band power amplifiers may be employed. Such implementations may allow for coupling between a low gain power amplifier to the antenna with little or no filter-duplexer or other like circuitry. The low gain power amplifier/amplifiers broadband noise may be sufficiently rejected by the antennas isolation in order to avoid degrading the RFIC receiver sensitivity. In a design with high gain power amplifier such as in Figs 3 and 5 there may be a need for duplexers with high rejection at the receive band in the order of 40-45dB since the amplifiers gain may be significantly high and its output noise may also be significantly high accordingly and thus the antenna isolation may be insufficient to reject such.

While there has been illustrated and described what are presently considered to be example features, it will be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter may also include all aspects falling within the scope of appended claims, and equivalents thereof.

## Claims

1. An apparatus comprising:
a plurality of antennas including a receive antenna (402) and a transmit antenna (404), wherein at least one of said receive antenna (402) and said transmit antenna (404) are adapted to provide at least 15 dB of isolation there between during transmission of a wireless signal via said transmit antenna (404) and wherein the transmit antenna (404) is configured to be adaptively resonant tuned based on a detected transmit signal and a measured power of the return signal from the transmit antenna; and
a circuit operatively coupled to said receive antenna (402) and said transmit antenna (404) and comprising a power amplifier arrangement (408) in a transmit path coupled to said transmit antenna (404); **characterised in that** said power amplifier arrangement (408) comprises:
a first stage amplifier (410), and a second stage amplifier (414) coupled to the transmit antenna (404), the first stage amplifier (410) having a higher gain than the second stage amplifier (414), the first and second amplifiers operatively arranged in series with a filter (412) coupled there between; and
wherein said circuit provides a receive path coupled to said receive antenna (402) and wherein neither said receive path nor said transmit path comprise a duplexer.

2. The apparatus as recited in Claim 1, wherein at least one of said first amplifier (410) and said second amplifier (414) comprises a narrowband amplifier.

3. The apparatus as recited in Claim 1, wherein the apparatus is implemented in a small form factor device.

4. The apparatus as recited in Claim 1 , wherein the apparatus is implemented in a large form factor device and at least one of said receive antenna (402) and said transmit antenna (404) are adapted to provide at least 20 dB of isolation there between during transmission of said wireless signal via said transmit antenna (404).

5. The apparatus as recited in Claim 1, wherein at least one of said transmit (404) and receive antennas (402) is selectively adaptable for operation with at least two different wireless signal frequencies, frequency bands, or frequency channels

6. The apparatus as recited in Claim 1, wherein said circuit further comprises a transceiver (312) coupled to said power amplifier arrangement (408).

7. The apparatus as recited in Claim 1 , wherein said circuit further comprises a transceiver (312) and wherein said transmit path of said circuit further comprises at least one transmit path filter (314) coupled between said transceiver and said power amplifier arrangement (408).

8. A method comprising:
operatively enabling a receive antenna and a transmit antenna to provide at least 15 dB of isolation there between during transmission of a wireless signal via said transmit antenna and wherein the transmit antenna (404) is configured to be adaptively resonant tuned based on a detected transmit signal and a measured power level of a return signal from the transmit antenna; and
operating a circuit coupled to said receive antenna and said transmit antenna and comprising a power amplifier arrangement in a transmit path coupled to said transmit antenna; **characterised by** said power amplifier arrangement comprising:
a first stage amplifier, and a second stage amplifier coupled to the transmit antenna, the first and second amplifiers operatively arranged in series with a filter coupled there between the first stage amplifier (410) having a higher gain than the second stage amplifier (414); wherein said circuit provides a receive path coupled to said receive antenna; and wherein neither said receive path nor said transmit path comprise a duplexer.

## Patentansprüche

1. Eine Vorrichtung, die aufweist:
eine Vielzahl von Antennen einschließlich einer Empfangsantenne (402) und einer Sendeantenne (404), wobei die Empfangsantenne (402) und/oder die Sendeantenne (404) ausgebildet sind, um eine Isolation von wenigstens 15 dB zwischen denselben während des Sendens eines Funksignals über die Sendeantenne (404) vorzusehen, und wobei die Sendeantenne (404) konfiguriert ist, um adaptiv in ihrer Resonanz basierend auf einem erfassten Sendesignal und einer gemessenen Leistung des Antwortsignals von der Sendeantenne (404) eingestellt zu werden, und
einen Schaltkreis, der operativ mit der Empfangsantenne (402) und der Sendeantenne (404) gekoppelt ist und eine Leistungsverstärkeranordnung (408) in einem mit der Sendeantenne (404) gekoppelten Sendepfad aufweist, **dadurch gekennzeichnet, dass** die Leistungsverstärkeranordnung (408) aufweist:
einen Erste-Stufe-Verstärker (410) und einen Zweite-Stufe-Verstärker (414), die mit der Sendeantenne (404) gekoppelt sind, wobei der Erste-Stufe-Verstärker (410) eine größere Verstärkung aufweist als der Zweite-Stufe-Verstärker (414), wobei die ersten und zweiten Verstärker operativ in Reihe mit einem dazwischen gekoppelten Filter (412) angeordnet sind,
wobei der Schaltkreis einen Empfangspfad vorsieht, der mit der Empfangsantenne (402) gekoppelt ist und wobei weder der Empfangspfad noch der Sendepfad einen Duplexer aufweisen.

2. Vorrichtung nach Anspruch 1, wobei der erste Verstärker (410) und/oder der zweite Verstärker (414) ein Schmalbandverstärker sind.

3. Vorrichtung nach Anspruch 1, wobei die Vorrichtung in einem Gerät mit einem kleinen Formfaktor implementiert ist.

4. Vorrichtung nach Anspruch 1, wobei die Vorrichtung in einem Gerät mit einem großen Formfaktor implementiert ist und die Empfangsantenne (402) und/oder die Sendeantenne (404) ausgebildet sind, um eine Isolation von wenigstens 20 dB zwischen denselben während des Sendens des Funksignals über die Sendeantenne (404) vorzusehen.

5. Vorrichtung nach Anspruch 1, wobei die Sendeantenne (404) und/oder die Empfangsantenne (402) wahlweise für einen Betrieb mit wenigstens zwei verschiedenen Funksignalfrequenzen, Frequenzbändern oder Frequenzkanälen angepasst werden können.

6. Vorrichtung nach Anspruch 1, wobei der Schaltkreis weiterhin einen Sendeempfänger (312) aufweist, der mit der Leistungsverstärkeranordnung (408) gekoppelt ist.

7. Vorrichtung nach Anspruch 1, wobei der Schaltkreis weiterhin einen Sendeempfänger (312) aufweist und wobei der Sendepfad des Schaltkreises weiterhin wenigstens ein Sendepfadfilter (314) aufweist, das zwischen dem Sendeempfänger und der Leistungsverstärkeranordnung (408) gekoppelt ist.

8. Ein Verfahren, das aufweist:
operatives Aktivieren einer Empfangsantenne und einer Sendeantenne, um eine Isolation von wenigstens 15 dB zwischen denselben während des Sendens eines Funksignals über die Sendeantenne vorzusehen, wobei die Sendeantenne (404) konfiguriert ist, um adaptiv in ihrer Resonanz basierend auf einem erfassten Sendesignal und einem gemessenen Leistungspegel des Antwortsignals von der Sendeantenne (404) eingestellt zu werden, und
Betreiben eines Schaltkreises, der mit der Empfangsantenne und der Sendeantenne gekoppelt ist und eine Leistungsverstärkeranordnung in einem mit der Sendeantenne gekoppelten Sendepfad aufweist,
**dadurch gekennzeichnet, dass** die Leistungsverstärkeranordnung aufweist:
einen Erste-Stufe-Verstärker und einen Zweite-Stufe-Verstärker, die mit der Sendeantenne gekoppelt sind, wobei die ersten und zweiten Verstärker operativ in Reihe mit einem dazwischen gekoppelten Filter angeordnet sind, wobei der Erste-Stufe-Verstärker (410) eine größere Verstärkung aufweist als der Zweite-Stufe-Verstärker (414), wobei der Schaltkreis einen Empfangspfad vorsieht, der mit der Empfangsantenne gekoppelt ist, und wobei weder der Empfangspfad noch der Sendepfad einen Duplexer aufweisen.

## Revendications

1. Appareil comprenant:
une pluralité d'antennes comprenant une antenne de réception (402) et une antenne d'émission (404), dans lequel au moins l'une parmi ladite antenne de réception (402) et ladite antenne d'émission (404) est adaptée pour fournir au moins 15 dB d'isolement entre elles pendant la transmission d'un signal sans fil par l'intermédiaire de ladite antenne d'émission (404) et dans lequel l'antenne d'émission (404) est configurée pour être accordée pour résonner de façon adaptative sur la base d'un signal d'émission détecté ainsi que une puissance mesurée du signal de retour à partir de l'antenne d'émission (404) ; et
un circuit couplé de façon fonctionnelle à ladite antenne de réception (402) et ladite antenne d'émission (404) et comprenant un agencement formant amplificateur de puissance (408) dans un chemin de transmission couplé à ladite antenne d'émission (404) ; **caractérisé en ce que** ledit agencement formant amplificateur de puissance (408) comprend :
un amplificateur de premier étage (410), et un amplificateur de deuxième étage (414) couplé à l'antenne d'émission (404), l'amplificateur de premier étage (410) présentant un gain plus élevé que celui de l'amplificateur de deuxième étage (414), le premier et le deuxième amplificateur étant agencés de façon fonctionnelle en série avec un filtre (412) couplé entre les deux ; et
dans lequel ledit circuit fournit un chemin de réception couplé à ladite antenne de réception (402) et dans lequel ni ledit chemin de réception ni ledit chemin de transmission comprennent un duplexeur.

2. Appareil selon la revendication 1, dans lequel au moins un parmi ledit premier amplificateur (410) et ledit deuxième amplificateur (414) comprend un amplificateur à bande étroite.

3. Appareil selon la revendication 1, dans lequel l'appareil est mis en oeuvre dans un dispositif à petit facteur de forme.

4. Appareil selon la revendication 1, dans lequel l'appareil est mis en oeuvre dans un dispositif à facteur de forme important et au moins l'une parmi ladite antenne de réception (402) et ladite antenne d'émission (404) sont adaptées pour fournir au moins 20 dB d'isolement entre elles pendant la transmission dudit signal sans fil via ladite antenne d'émission (404).

5. Appareil selon la revendication 1, dans lequel au moins une parmi lesdites antennes d'émission (404) et de réception (402) est adaptable sélectivement pour fonctionner avec au moins deux fréquences, bandes de fréquence ou canaux de fréquence de signal sans fil différents.

6. Appareil selon la revendication 1, dans lequel ledit circuit comprend en outre un émetteur-récepteur (312) couplé audit agencement formant amplificateur de puissance (408).

7. Appareil selon la revendication 1, dans lequel ledit circuit comprend en outre un émetteur-récepteur (312) et dans lequel ledit chemin de transmission dudit circuit comprend en outre au moins un filtre de chemin de transmission (314) couplé entre ledit émetteur-récepteur et ledit agencement formant amplificateur de puissance (408).

8. Un procédé comprenant les étapes consistant à :
permettre, fonctionnellement, une antenne de réception et une antenne d'émission à fournir au moins 15 dB d'isolement entre elles pendant la transmission d'un signal sans fil par l'intermédiaire de ladite antenne d'émission et dans lequel l'antenne d'émission est configurée pour être accordée pour résonner de façon adaptative sur la base d'un signal d'émission détecté ainsi que une puissance mesurée du signal de retour à partir de l'antenne d'émission ; et
faire fonctionner un circuit couplé à ladite antenne de réception et ladite antenne d'émission et comprenant un agencement formant amplificateur de puissance dans un chemin de transmission couplé à ladite antenne d'émission ; **caractérisé par le fait que** ledit agencement formant amplificateur de puissance comprend :
un amplificateur de premier étage, et un amplificateur de deuxième étage couplé à l'antenne d'émission, le premier et deuxième amplificateurs étant agencés de façon fonctionnelle en série avec un filtre couplé entre les deux, l'amplificateur de premier étage (410) ayant un gain plus élevé que l'amplificateur de deuxième étage (414) ; dans lequel ledit circuit fournit un chemin de réception couplé à ladite antenne de réception ; et dans lequel ni ledit chemin de réception ni ledit chemin de transmission comprennent un duplexeur.
